# EUROPÄISCHE PATENTSCHRIFT

(11) **EP 1 485 224 B1**
(45) Veröffentlichungstag und Bekanntmachung des Hinweises auf die Patenterteilung: **20.02.2008**
(21) Anmeldenummer: 03718676.4
(22) Anmeldetag: 25.02.2003
(51) Int. Cl.: B23K 1/00, B23K 1/19, B23K 1/20

(54) **VERFAHREN ZUM LÖTEN VON ALUMINIUM**
METHOD FOR SOLDERING ALUMINUM
PROCEDE DE BRASAGE D'ALUMINIUM

(30) Priorität: 08.03.2002 DE 10210217
(43) Veröffentlichungstag der Anmeldung: 15.12.2004
(73) Patentinhaber: Behr GmbH & Co. KG, 70469 Stuttgart (DE)
(72) Erfinder: ENGLERT, Peter, 74177 Bad Friedrichshall (DE); HEEB, Wolfgang, 73614 Schorndorf (DE); KNÖDLER, Wolfgang, 71332 Waiblingen (DE)
(74) Vertreter: Grauel, Andreas
(86) Internationale Anmeldenummer: PCT/EP2003/001894
(87) Internationale Veröffentlichungsnummer: WO 2003/076113

(56) Entgegenhaltungen:
- EP-A- 1 067 213
- DE-A- 3 206 809
- DE-A- 3 442 538
- US-A- 3 844 777
- SCHMATZ D J ET AL: "A FLUXLESS PROCESS FOR BRAZING ALUMINUM HEAT EXCHANGERS IN INERT GAS" , WELDING JOURNAL, AMERICAN WELDING SOCIETY. MIAMI, US, VOL. 62, NR. 10, PAGE(S) 31-38 XP002029306 ISSN: 0043-2296 das ganze Dokument

## Beschreibung

Die Erfindung betrifft ein Verfahren zum Löten von Aluminium gemäß dem Oberbegriff des Anspruches 1.

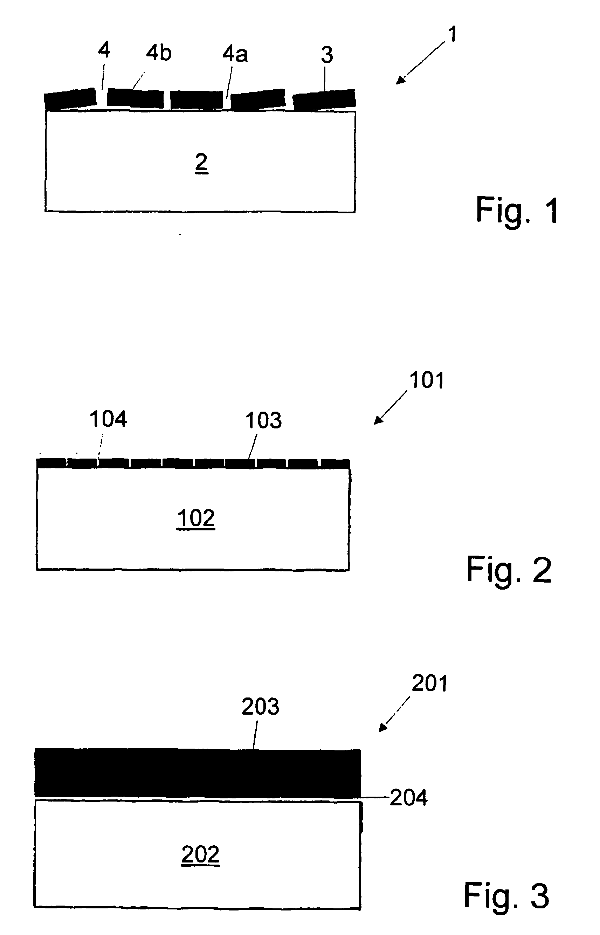

Zum Verbinden zweier metallischer Werkstücke mittels einer Lötverbindung ist eine mit Lot benetzte, d.h. eine ausreichend oxidfreie Oberfläche erforderlich. Dies bereitet insbesondere beim Löten von Aluminium-Werkstücken in der Praxis Probleme, da häufig durchgehende Oxidschichten auf der Werkstoffoberfläche vorhanden sind. Sind diese Oxidschichten nicht zu dick, wie in Fig. 2 dargestellt, so reißen sie beim Erwärmen derart auf (vertikal zur Oberfläche des Werkstücks 101), dass die Oxidschicht 103 viele kleine Risse 104 aufweist, in die das Lot fließen kann. Dabei haftet die Oxidschicht 103 bis zum Erreichen der Löttemperatur fest auf dem Grundwerkstoff 102, d.h. die Adhäsion ist größer als die Kohäsion.

Ist die Oxidschicht 203, wie in Fig. 3 dargestellt, so dick, dass sie nicht mehr aufgrund der unterschiedlichen Wärmeausdehnungen des Grundwerkstoffs 202 und der Oxidschicht 203 aufreißt (Riss 204), so wird die Oxidschicht 203 vom Grundwerkstoff 202 abgeschert, d.h. die Adhäsion ist kleiner als die Kohäsion. Sie liegt dann als Trennschicht zwischen den beiden miteinander zu verlötenden Werkstücken 201 und verhindert die Ausbildung einer Lötverbindung.

Ferner wird zum flussmittelfreien Löten von Aluminium ein Aufreißen der Oxidschicht durch eine vorherige Behandlung des Werkstückes erreicht, wobei Elemente in den Grundwerkstoff eindiffundieren, oder durch eine Plattierung mit Lot, bspw. Ni-Al-Löten. Ferner kann ein Aufreißen der Oxidschicht durch das Ausdampfen von Elementen, z.B. Mangan, aus dem Grundwerkstoff oder der Lotplattierung beim Vakuumlöten erfolgen. Jedoch tritt bei diesen Verfahren auch ein unkontrolliertes Aufreißen der Oxidschicht infolge der unterschiedlichen Wärmeausdehnungskoeffizienten auf, so dass auch diese Verfahren noch Wünsche offen lassen.

Die Druckschrift DE 32 06 809 A1 offenbart ein Verfahren zum Löten von schnell oxidierenden Metallen nach vorheriger Beseitigung der Oxidschicht durch Amalgamierung.

Ausgehend von diesem Stand der Technik ist es Aufgabe der Erfindung, ein verbessertes Lötverfahren bereitzustellen.

Diese Aufgabe wird gelöst durch ein Verfahren mit den Merkmalen des Anspruches 1. Vorteilhafte Ausgestaltungen sind Gegenstand der Unteransprüche.

Erfindungsgemäß wird ein Verfahren zum flussmittelfreien Löten von Aluminium zur Verfügung gestellt, gemäß dem sich die Oxidschicht, welche den Grundwerkstoff bedeckt, beim Erwärmen teilweise ablöst. Dies erfolgt vorzugsweise unter Bildung von Rissen in vertikaler Richtung bezüglich der Oberfläche des Grundwerkstoffes und unter Bildung von Rissen zwischen dem Grundwerkstoff und der Oxidschicht.

Der Grundwerkstoff des Werkstückes weist vorzugsweise eine andere Wärmedehnung auf als die an den Grundwerkstoff angrenzende Oxidschicht, wodurch sich infolge der Erwärmung beim Lötvorgang infolge der Tempera turabhängigkeit der Größenänderungen von Grundwerkstoff und Oxidschicht definierte Spannungen aufbauen lassen.

Vor dem Löten erfolgt eine definierte Oxidation der Werkstückoberfläche. Während oder nach der Oxidation wird die Oxidschicht mit Fremdatomen dotiert. Diese Fremdatome, insbesondere Fluoride, bilden eine Art von "Sollbruchstellen", an denen sich bevorzugt beim Erwärmen in der Oxidschicht Risse bilden. Die Herstellung der Oxidschicht erfolgt vorzugsweise chemisch, elektrochemisch oder physikalisch mit einem bekannten Verfahren.

Bei Durchführung des Erwärm- und Lötvorganges unter Schutzgas, bspw. in einem Schutzgas-Durchlaufofen, ist für dieses Verfahren eine wesentlich weniger aufwendig Anlagentechnik erforderlich, da kein Vakuum-Lötofen erforderlich ist. Ferner lässt sich Aluminium flussmittelfrei unter Schutzgas löten, wobei die Vorbehandlung weitaus weniger aufwendig ist als bspw. beim Ni-Al-Löten, das eine galvanisch aufgebrachte Nickel-Schicht erfordert. Außerdem ist der Lötprozess unabhängig von, den Lötprozess beeinflussenden, physikalischen Eigenschaften, wie Dampfdruck, Diffusionsverhalten bisher notwendiger Legierungselemente bzw. Oberflächenschichten, wodurch eine hohe Prozesssicherheit resultiert. Auch beeinflussen zusätzliche (Legierungs-)Elemente o.ä. nicht die Korrosionsbeständigkeit der Werkstükke.

Vorzugsweise wird dieses Lötverfahren zum Verlöten einzelner Bauteile für einen Kühler, bspw. für eine Klimaanlage eines Kraftfahrzeugs, verwendet.

Im folgenden wird die Erfindung anhand eines Ausführungsbeispiels unter Bezugnahme auf die Zeichnung im einzelnen erläutert. In der Zeichnung zeigen:
- Fig. 1: eine erfindungsgemäß vorbereitete Werkstückoberfläche,
- Fig. 2: eine erste, schlecht geeignete Werkstückoberfläche gemäß dem Stand der Technik, und
- Fig. 3: eine zweite, ungeeignete Werkstückoberfläche gemäß dem Stand der Technik.

Fig. 1 zeigt ein Werkstück 1 mit einem Grundwerkstoff 2 aus Aluminium an dessen Oberfläche sich eine Oxidschicht 3, d.h. eine Aluminium-Oxidschicht, befindet. Die Oxidschicht 3 weist Risse 4 auf, die sich sowohl in vertikaler Richtung bezüglich der Oberfläche des Grundwerkstoffes 2 (Risse 4a) als auch teilweise entlang der Oberfläche des Grundwerkstoffes 2 (Risse 4b) verlaufen.

Bei der Oxidschicht 3 handelt es sich um eine definiert hergestellte Schicht, die bspw. chemisch hergestellt wird. Hierfür kommt zum Beispiel das Böhmit-Verfahren in Frage. Ferner kann die Oberfläche des Werkstückes 1 mit einem flüssigen Oxidationsmittel, bspw. Wasserstoffperoxid, oder durch die Einwirkung von Ozon in einer Plasmakammer (oxidierendes Plasma) entsprechend behandelt werden. Alternativ kann die Oberfläche elektrochemisch, bspw. mit einem Anodisierungsverfahren, durch elektrochemische Reaktion mit speziellen ionenaktiven Lösungsmitteln, z.B. Propylenkarbonat, oder durch kathodische Verfahren behandelt werden. Ferner kommen die physikalischen Verfahren PVD und CVD in Frage.

Während oder nach der Oxidation erfolgt eine Dotierung, der Oxidschicht, mit Fremdatomen. Dabei bilden die Fremdatome "Sollbruchstellen", durch die das Abplatzverhalten der Oxidschicht, d.h. die Rissbildung, optimiert wird.

Liegt eine entsprechende Oxidschicht 3 vor, so werden die Lötstellen zweier Werkstücke 1 und (festes) Lot entsprechend positioniert und die gesamte Anordnung in einen Schutzgas-Ofen, insbesondere in einen Schutzgas-Durchlaufofen, eingebracht, wo die Werkstücke 1 und das Lot erwärmt werden. Aufgrund der unterschiedlichen Wärmeausdehnungskoeffizienten des Grundwerkstoffes 2 und der Oxidschicht 3 kommt es zu Spannungen insbesondere in der Oxidschicht 3, jedoch auch im Grenzbereich zwischen dem Grundwerkstoff 2 und der Oxidschicht 3, die bei weiterer Erwärmung auf die eigentliche Löttemperatur so groß werden, dass sich die oben beschriebenen Risse 4 bilden. Wird die Löttemperatur erreicht, so dringt - infolge der Kapillarwirkung - flüssiges Lot in die Spalte zwischen den Werkstücken 1 ein und weiter in die Risse 4a und 4b, bis diese im Optimalfall vollständig mit Lot gefüllt sind. Danach erfolgt die Abkühlung und die verlöteten Werkstücke 1 werden dem Schutzgas-Ofen entnommen.

### Bezugszeichenliste

1, 101, 201 Werkstück
2, 102, 202 Grundwerkstoff
3, 103, 203 Oxidschicht
4, 104, 204 Riss
4a, 4b Riss

## Patentansprüche

1. Verfahren zum flussmittelfreien Löten von Aluminiumwerkstücken, wobei ein Werkstück (1) einen Grundwerkstoff (2) mit einer Oxidschicht (3) aufweist, **dadurch gekennzeichnet, dass** die Werkstückoberfläche vor dem Löten einer definierten Oxidation ausgesetzt wird und während oder nach der Oxidation die Oxidschicht mit Fremdatomen dotiert wird, die Lötstellen zweier Werkstücke und Lot positioniert werden und anschließend der Werkstoff und das Lot zum Löten erwärmt wird, wobei sich die Oxidschicht (3) beim Erwärmen teilweise vom Grundwerkstoff (2) ablöst und Lot zwischen den Werkstücken in Risse eindringen kann.

2. Verfahren nach Anspruch 1, **dadurch gekennzeichnet, dass** sich in der Oxidschicht (3) beim Erwärmen Risse (4a) in vertikaler Richtung bezüglich der Oberfläche des Grundwerkstoffes (2) bilden.

3. Verfahren nach einem der vorhergehenden Ansprüche, **dadurch gekennzeichnet**, sich beim Erwärmen Risse (4b) zwischen dem Grundwerkstoff (2) und der Oxidschicht (3) bilden.

4. Verfahren nach einem der vorhergehenden Ansprüche, **dadurch gekennzeichnet, dass** der Grundwerkstoff (2) des Werkstückes (1) eine andere Wärmedehnung aufweist als die an den Grundwerkstoff (2) angrenzende Oxidschicht (3).

5. Verfahren nach einem der vorhergehenden Ansprüche, **dadurch gekennzeichnet, dass** als Fremdatome Fluoride verwendet werden.

6. Verfahren nach einem der vorhergehenden Ansprüche, **dadurch gekennzeichnet, dass** die Herstellung der Oxidschicht (3) chemisch, elektrochemisch oder physikalisch erfolgt.

7. Verfahren nach einem der vorhergehenden Ansprüche, **dadurch gekennzeichnet, dass** die Erwärmung und Lötung unter Schutzgas durchgeführt wird.

8. Verfahren nach einem der vorstehenden Ansprüche, **dadurch gekennzeichnet, dass** Bauteile für einen Kühler verlötet werden.

## Claims

1. Method for the flux-free soldering of aluminium workpieces, a workpiece (1) consisting of a basis material (2) with an oxide film (3), **characterised in that** before soldering, the surface of the workpiece is exposed to a defined oxidation process and during or after this oxidation the oxide film is doped with foreign atoms, the soldering points of two workpieces and the solder are positioned, and the material and solder are then heated to bring about the soldering process, such that on heating the oxide film (3) becomes partially detached from the basis material (2) and solder can penetrate between the workpieces into cracks.

2. Method according to Claim 1, **characterised in that** on heating, cracks (4a) are formed in the oxide film (3) in a direction perpendicular to the surface of the basis material (2).

3. Method according to either of the preceding claims, **characterised in that** on heating, cracks (4b) form between the basis material (2) and the oxide film (3).

4. Method according to any of the preceding claims, **characterised in that** the thermal expansion of the basis material (2) of the workpiece is different from that of the oxide film (3) adjoining the basis material (2).

5. Method according to any of the preceding claims, **characterised in that** fluoride atoms are used as the foreign atoms.

6. Method according to any of the preceding claims, **characterised in that** the oxide film (3) is produced by chemical, electrochemical or physical means.

7. Method according to any of the preceding claims, **characterised in that** the heating and soldering are carried out under a protective gas.

8. Method according to any of the preceding claims, **characterised in that** components for a radiator are soldered.

## Revendications

1. Procédé permettant le brasage, sans fondant, de pièces d'usinage en aluminium, une pièce d'usinage (1) présentant un matériau de base (2) comprenant une couche d'oxyde (3),
**caractérisé en ce que** la surface de la pièce d'usinage est exposée, avant le brasage, à une oxydation définie, et la couche d'oxyde est dopée avec des atomes étrangers pendant ou après l'oxydation, les points de brasage de deux pièces d'usinage et la brasure sont positionnés et, ensuite, le matériau et la brasure servant au brasage sont chauffés, la couche d'oxyde (3) se détachant partiellement du matériau de base (2) au cours du chauffage, et la brasure peut pénétrer dans des fissures formées entre les pièces d'usinage.

2. Procédé selon la revendication 1, **caractérisé en ce que** des fissures (4a) se forment dans la couche d'oxyde (3), au cours du chauffage, dans la direction verticale par rapport à la surface du matériau de base (2).

3. Procédé selon l'une ou l'autre des revendications précédentes, **caractérisé en ce que** des fissures (4b) se forment au cours du chauffage, entre le matériau de base (2) et la couche d'oxyde (3).

4. Procédé selon l'une quelconque des revendication précédentes, **caractérisé en ce que** le matériau de base (2) de la pièce d'usinage (1) présente une dilatation thermique différente de celle de la couche d'oxyde (3) contiguë au matériau de base (2).

5. Procédé selon l'une quelconque des revendications précédentes, **caractérisé en ce que** l'on utilise, comme atomes étrangers, des fluorures.

6. Procédé selon l'une quelconque des revendications précédentes, **caractérisé en ce que** la fabrication de la couche d'oxyde (3) est réalisée chimiquement, électrochimiquement ou physiquement.

7. Procédé selon l'une quelconque des revendications précédentes, **caractérisé en ce que** le chauffage et le brasage sont effectués sous gaz protecteur.

8. Procédé selon l'une quelconque des revendications précédentes, **caractérisé en ce que** des pièces sont brasées pour un radiateur.
